# EUROPÄISCHE PATENTSCHRIFT

(11) **EP 3 178 624 B1**
(45) Veröffentlichungstag und Bekanntmachung des Hinweises auf die Patenterteilung: **18.09.2024**
(21) Anmeldenummer: 15202155.6
(22) Anmeldetag: 22.12.2015
(51) Int. Cl.: B29C 43/40, B29C 45/14, B29C 43/02, B29C 43/18, B29C 43/36, B29C 45/56, B29L 31/30, B29C 43/52

(54) **VORRICHTUNG UND VERFAHREN ZUR HERSTELLUNG VON VERBUNDFORMTEILEN**
DEVICE AND METHOD FOR MANUFACTURING COMPOSITE PARTS
DISPOSITIF ET PROCÉDÉ DESTINE A LA FABRICATION DE PIÈCES COMPOSITES

(30) Priorität: 08.12.2015 CH 17822015
(43) Veröffentlichungstag der Anmeldung: 14.06.2017
(73) Patentinhaber: Georg Kaufmann Formenbau AG, 5453 Busslingen (CH)
(72) Erfinder: FREI, Michael, 5024 Küttigen (CH); LEBER, Richard, 79809 Weilheim (DE); VOLLENWEIDER, Thomas, 5603 Staufen (CH)
(74) Vertreter: Laminger, Norbert

(56) Entgegenhaltungen:
- EP-A1- 1 090 731
- EP-A1- 2 554 352
- DE-A1- 10 126 991
- DE-A1- 102010 016 350
- DE-A1- 2 548 318
- DE-A1- 3 434 366
- FR-A1- 2 688 442
- FR-A1- 2 985 929
- JP-A- H02 295 712
- JP-A- H04 219 220
- JP-A- S61 137 713
- MICHAELI W ET AL: "HINTERSPRITZTECHNIK, TEIL 2: EINE ANALYSE DER RANDBEDINGUNGEN", PLASTVERARBEITER, HUETHIG GMBH, HEIDELBERG, DE, vol. 44, no. 4, 1 April 1993 (1993-04-01), pages 62 - 64, 66, 6, XP000393013, ISSN: 0032-1338

## Beschreibung

Die vorliegende Erfindung betrifft eine Vorrichtung zur Herstellung eines Verbundformteils mit einer mindestens einen Teil der Oberfläche des Verbundformteils umspannenden flächenhaften Dekorstruktur. Weiter betrifft die vorliegende Erfindung ein Verfahren zur Herstellung entsprechender Verbundformteile, sowie einen mittels dieses Verfahrens hergestellten Verbundformteil.

Bei der Herstellung von Formteilen, welche aus Stoffen mit unterschiedlichen physikalischen Eigenschaften bestehen, hat es sich unter anderem bewährt, diese Teile mittels eines Formungsverfahrens stoffschlüssig oder mindestens formschlüssig zu verbinden. Solche Verfahren finden besonders da Anwendungen, wo zum Beispiel Materialien, welche technische Erfordernisse an Leichtigkeit und/oder Stabilität erfüllen müssen, zusätzlich mit einer ansprechenderen Optik und/oder Haptik versehen werden sollen.

Dazu werden Folien mit den gewünschten optischen und/oder haptischen Eigenschaften vorgeformt, oder in einem noch elastischen/flexiblen Zustand in eine Form gegeben und mit dem entsprechenden Trägermaterial hinterfüllt. Um sicherzustellen, dass die gesamte mit der Folie zu überziehende Fläche auch von dieser bedeckt wird, hat diese Folie in der Regel einen Überhang, welcher in einem weiteren Verfahrensschritt abgelöst werden muss.

So hat sich zum Beispiel bei der Herstellung hinterspritzer Formteile mit den entsprechenden Dekorfolien die Herstellung mit einer Spritzgussvorrichtung durchgesetzt, bei der eine vorgeformte Folie mit der entsprechenden Dekorstruktur in eine Matrize eingelegt wird und anschließend in einem Spritz- oder Quellflussprägeverfahren mit dem entsprechenden Trägermaterial verbunden wird. Beim Entformen bleibt ein entsprechender Überschuss der Folie am Verbundformteil haften und wird meist händisch entfernt. Dadurch kann es zu Ausschussware kommen, wenn dabei die Struktur des Verbundformteils beschädigt wird. Entsprechende automatisierte Vorrichtungen zur Entfernung des Überhangs sind hingegen teuer und aufwändig in der Wartung und im Unterhalt und erhöhen daher die Betriebskosten wesentlich.

Bei einer Variante dieser Herstellungsart wird ein Formpressen verwendet, bei dem eine im Wesentlichen flexible Folie eingelegt, und anschließend ein herkömmliches Formpressen durchgeführt wird, bei dem eine auf der Matrize befindliche Oberflächenstruktur auf die Folie aufgeprägt wird. Ein solches Verfahren ist zum Beispiel in der DE 199 160 23 A1 gezeigt, bei dem ein Presswerkzeug zur Herstellung von mit einer flexiblen Folie bedeckten Formteilen verwendet wird. Bei diesem Dokument wird auch gleich versucht mittels Schneidflächen die Ausdehnungen der Folie an die gewünschte Form des Verbundformteils anzupassen.

Ähnlich ist es bei der Spritzpräge-Vorrichtung und dem entsprechenden Verfahren gemäss der DE 10 2010 016350 A1. Auch hier wird im Zuge des Schliessens der Formwerkzeuge die hinterspritzte Folie abgeschert und derart die Folie am Übergang von der Vorderseite auf die Rückseite des Formteils abgetrennt.

Die Vorrichtung gemäss der DE 25 48 318 A1 weist einen von den Formwerkzeugen separaten Niederhalter für die zu beschichtende Folie auf, der auch den äusseren Umfang des Endproduktes beschichtete Folie bestimmt. Mittels einer Abquetschkante an diesem Niederhalter wird die Folie am Randbereich, d.h. ebenfalls wieder am Übergang zwischen der Seite der Folie und der Seite des aufgebrachten Materials abgetrennt.

Solche Schnitte sind allerdings an den Kanten des Verbundformteils unansehnlich und benötigen unter Umständen eine weitere Bearbeitung.

Eine Möglichkeit wie bei Verbundformteilen eine ansehnliche Kante herstellbar ist, wird in der DE 34 343 66 A1 gezeigt. Dort vollführt die Folie einen Umbug und wird entlang einer abgewinkelten Quetschkante geführt. Somit entsteht eine Sollbruchstelle mittels welcher der Überschuss der Folie vereinfacht abgerissen werden kann. Die Vorrichtung der DE 34 34 366 A1 weist zwei zusammenwirkende separate Bauteile auf, die den Umbug bewirken. Auch hier wird die Abtrennung der über den Bauteil hinausstehenden Dekorstruktur erst beim Öffnen der Form nach dem Aushärten durch eine Quetschkante an einem der Bauteile bewerkstelligt. Obschon dadurch das Herstellungsverfahren vereinfacht werden kann, kann das Abreißen zu einer Beschädigung des Verbundformteils und insbesondere der dekorativen Folie führen. Außerdem beinhaltete das Abreißen nach wie vor einen manuellen Schritt und erhöht somit die Produktionskosten.

Die EP 1 090 731 A1 offenbart die Herstellung hinterspritzter Dekorstrukturen mit einem Umbug mit einer Vorrichtung derart, dass die Ausbildung des Umbugs der Dekorstruktur immer durch ein Zusammenwirken von zwei zueinander verschiebbaren Vorrichtungsteilen geschieht. Überdies bleibt der Vorrichtungsteil mit der Nase zur Abtrennung des Überschusses der Dekorstruktur bis nach dem Aushärten des Formteils geschlossen und wird erst danach wieder geöffnet, wobei dann erst das Abtrennen der überschüssigen Dekorstruktur stattfindet.

Die FR 2985929 A1 offenbart herkömmliches Spritzgiessen mit einer Anordnung, die zusätzlich zu Stempel und Matrize ein weiteres Formwerkzeugteil aufweist, das mit einer Halteschulter das Dekormaterial ohne Umbug im oberen Formwerkzeugteil hält, solang noch das Trägermaterial nicht eingebracht und ausgehärtet ist. Dieses Formwerkzeugteil wird beim Entformen des Verbundformteils in spitzem Winkel zur Richtung der Relativbewegung von Stempel und Matrize verfahren.

Auch die FR 2688442 A1 offenbart ebenfalls ein herkömmliches Verfahren zur Herstellung eines Verbundformteils mit hinterspritztem Dekormaterial. Mittels eines seitlichen Formwerkzeugteils wird der Rand des Dekormaterials umgebogen und während des Prozesses gehalten, wobei aber kein Radius und keine zur Abtrennung eines überstehenden Randstreifens vorgesehene Nase an diesem Formwerkzeugteil vorhanden sind. Zwischen den Formwerkzeugteilen verbleibt immer zumindest ein der Dicke des Dekormaterials entsprechender Abstand und offensichtlich wird der Überstand des Dekormaterials in einem separaten, nachfolgenden Schritt und mit zusätzlichem Aufwand entfernt. Der besagte seitliche Formwerkzeugteil ist auch hier in einer Richtung verfahrbar, die mit der Richtung der Relativbewegung von Matrize und Stempel einen spitzen Winkel einschliesst, was allein der beschädigungslosen Entformbarkeit des ausgehärteten Formteils dient.

Es besteht somit ein Bedarf nach einer Vorrichtung und einem entsprechenden Verfahren, mit welchem man Verbundformteile mit flächenhaften Dekorstrukturen möglichst einfach und in einem Schritt entformen und dabei gleichzeitig vom Überschussmaterial der Dekorstruktur befreien kann.

Es ist eine Aufgabe der vorliegenden Erfindung mindestens einen Nachteil des bekannten zu beheben und insbesondere eine Vorrichtung und ein Verfahren bereit zu stellen, mit welchem sich ein Verbundformteil effizient und mit hoher Qualität herstellen lässt.

Diese Aufgabe ist durch eine Vorrichtung und ein Verfahren gemäß den unabhängigen Ansprüchen gelöst.

Ein Aspekt der vorliegenden Erfindung betrifft eine Vorrichtung zur Herstellung eines Verbundformteils mit mindestens einer, mindestens einen Teil der Oberfläche des Verbundformteils umspannenden, flächenhaften Struktur, insbesondere einer flächenhaften Dekorstruktur, und einer Trägerstruktur. Die Vorrichtung umfasst eine Matrize zur Aufnahme der flächenhaften Dekorstruktur in einem noch unverbundenen Zustand. Die Vorrichtung umfasst weiter einen Stempel und einen Schieber. Dabei sind Stempel, Matrize und Schieber so bewegbar angeordnet, dass sie einen geschlossenen Zustand annehmen können. In diesem geschlossenen Zustand definieren Stempel, Matrize und Schieber gemeinsam einen Hohlraum. Dieser entspricht im Wesentlichen der Form des herzustellenden Verbundformteils.

An mindestens einem der: Schieber, Stempel oder Matrize, insbesondere dem Schieber oder der Matrize, ist an einer Begrenzung des Hohlraums in geschlossenem Zustand ein Umbug definiert, der den Hohlraum begrenzt, wobei dieser Umbug von der aufliegenden flächenhaften Dekorstruktur mitbeschrieben wird. Im Sinne der vorliegenden Erfindung kann ein Umbug als strukturelles Merkmal dann bestehen, wenn beispielsweise eine Kante der flächenhaften Dekorstruktur um einen Winkel zwischen 90 und 270 ° umgelegt ist, bevorzugt um einen Winkel zwischen 90 und 180 ° umgelegt ist. Dieses strukturelle Merkmal ist am Schieber ausgebildet. In einer besonderen Ausführungsform ist dieser Umbug in geschlossenem Zustand ausgebildet. In einem mit der erfindungsgemässen Vorrichtung herstellbaren Verbundformteil kann durch den Umbug an einem der genannten Elemente sichergestellt werden, dass die flächenhafte(n) Dekorstruktur(en) um eine Oberfläche der Trägerstruktur auf eine Trägerteilrückseite umgelegt sind.

Der Schieber kann unabhängig vom Stempel betätigt werden. Die Bewegungsrichtung des Schiebers schliesst mit der Bewegungsrichtung des Stempels einen spitzen Winkel ein. Der Schieber weist weiterhin eine Nase auf, welche in dem besagten geschlossenen Zustand mindestens einen Zwischenraum zu Stempel oder Matrize im Wesentlichen überbrückt. In ihrer einfachsten Ausführungsform ist die Nase so ausgestaltet, dass eine Kante eine entsprechende Aufschlagsfläche im Inneren des Hohlraums definiert und eine andere Kante dieser zum Beispiel spitz zulaufenden Nase sich hin zu dieser verjüngt. Diese Nase kann in einer besonderen Ausführungsform als integraler Bestandteil eines der Elemente Schieber, Stempel oder Matrize ausgebildet sein.

Ein Zwischenraum zwischen zweien dieser Elemente kann so definiert sein, dass eine Distanz festgelegt wird, welche sich rechtwinkelig von den Tangenten der nächstliegenden, gegenüberliegenden Flächen einer Struktur zueinander bemisst. Im Sinne der vorliegenden Erfindung ist ein solcher Zwischenraum dann im Wesentlichen überbrückt, wenn mindestens 80 %, bevorzugt mindestens 90 %, besonders bevorzugt mindestens 95 % bis nahezu zur Kontaktierung der gegenüberliegenden Fläche überbrückt sind.

Mit anderen Worten ist die besagte Nase so an dem entsprechenden Element angeordnet, dass sie mit mindestens einer Flanke an der Definition des besagten Hohlraums beteiligt ist. In einer besonders bevorzugten Ausführungsform überbrückt die Nase den besagten Zwischenraum derart, dass ein Überschuss der flächenhaften Dekorstruktur, welche sich durch den besagten Zwischenraum erstreckt, von dieser durchtrennt wird.

Im Sinne der vorliegenden Erfindung, kann es sich bei der flächenhaften Dekorstruktur um ein beliebiges Material handeln, welches aufgrund seiner optischen, haptischen oder anderweitigen Eigenschaften ausgewählt wurde. Geeignete flächenhafte Dekorstrukturen wären zum Beispiel Stoff- und/oder Kunstlederapplikationen, Kunststofffolien, Kunststoffmehrschichtfolien z.B. mit Schaumrücken, Kunstfurniere oder Laminate. Dabei kann die flächenhafte Dekorstruktur für sich bereits in einem vorgeformten Zustand unverbunden vorliegen, was zum Beispiel bei den meisten hartschaligen, flächenhaften Dekorstrukturen der Fall ist, oder aber als flexible Folie unverbunden vorliegen. Dabei kann die flächenhafte Dekorstruktur eine unterschiedliche Beschaffenheit auf ihren Oberflächen aufweisen. So kann die der Trägerschicht zugewandten Seite so geschaffen sein, dass ein Verbund mit der Trägerschicht erleichtert wird. Die der Trägerschicht abgewandte Seite der flächenhaften Dekorstruktur kann auf vielfältige Weise im Hinblick auf ihre zu erfüllenden Dekoreigenschaften ausgestaltet sein. Die flächenhafte Dekorstruktur muss nicht zwingend einen dekorativen Charakter aufweisen. Zum Beispiel kann die Auswahl aufgrund thermischer, oder anderer physikalischer Eigenschaften erfolgen. Die flächenhafte Dekorstruktur kann zum Beispiel isolierende und/oder Wasser- und/oder Schmutzabweisende Eigenschaften aufweisen. In einer besonderen Ausführungsform ist die flächenhafte Dekorstruktur aufgrund ihrer Oberfläche besonders geeignet eine Beschichtung, z.B. eine Lackierung oder Lasur aufzunehmen. Diese Beschichtung kann aus dekorativen Gründen erfolgen, und/oder um der flächenhaften Dekorstruktur eine bestimmte erwünschte physikalische Eigenschaft zu geben.

Beispiele für flächenhafte Strukturen, welche keinen dekorativen Charakter aufweisen müssen sind Halbzeug Teile, wie z.B. Organobleche, Naturfasermatten, Naturfasergewebe, Fasertapes oder andere Faserverstärkte Halbzeuge. In diesem Falle werden über das Bauteil überstehende Bereiche dieser Halbzeuge durch die vorliegende Erfindung ebenfalls abgetrennt, sodass das Bauteil ebenfalls nicht mehr nachbearbeitet werden muss. Es ist auch denkbar, die vorliegende Erfindung in diesem Zusammenhang zu verwenden um Bauteile aus solchen Halbzeugen herzustellen, welche erst später in einem nachfolgenden Prozess mit einem Dekor versehen werden. Die Erfindung ermöglicht es hierbei, eine Nachbearbeitung der Abschlusskanten der aus diesen Halbzeugen hergestellten Bauteile zu umgehen.

Im Sinne der vorliegenden Anmeldung wird bei der Verwendung des Begriffs flächenhafter Dekorstruktur auch eine flächenhafte Struktur ohne zwingende dekorative Eigenschaft wie eben geschildert verstanden, sofern dies nicht explizit anderweitig erwähnt ist.

Im Sinne der vorliegenden Erfindung kann als Trägerstruktur das Material verstanden werden, welches in einem gehärteten Zustand entscheidend für die Vorgabe der Form des Verbundformteils ist. In den meisten Fällen wird es sich bei der Trägerstruktur um einen Kunststoff handeln, insbesondere um einen thermoplastischen Kunststoff oder einen Kunststoffschaum. Das Ausgangsmaterial für die Trägerstruktur, welches über eine geeignete Injektion oder Fließeinrichtung in die erfindungsgemäße Vorrichtung eingeführt oder eingespritzt werden kann, verfügt über die erforderlichen rheologischen Eigenschaften, um den durch die Vorrichtungselemente Stempel, Matrize und Schieber definierten Hohlraum auszufüllen. Im Falle eines Thermoplasten kann dies als Schmelze geschehen. Alternativ ist es aber auch denkbar, dass die Trägerstruktur nicht durch Abkühlung gehärtet wird, sondern durch die Induktion einer polymerischen Kettenreaktion nachdem sie den Hohlraum gefüllt hat. Geeignete Induktionsverfahren sind dem Fachmann bekannt und können chemische, optische und/oder thermische Polymerisationsinduktion umfassen. Besonders bei Schäumungsverfahren ist dabei zusätzlich der Volumenänderung der gehärteten Trägerstruktur Rechnung zu tragen. Bei der Härtung wird auch entsprechend der Verbund zwischen der Trägerstruktur und der flächenhaften Dekorstruktur eingegangen.

In einer besonderen Ausführungsform ist die Vorrichtung zur Herstellung eines Verbundformteils so ausgestaltet, dass eine Mehrzahl an flächenhaften Dekorstrukturen mit einer Trägerstruktur zum Verbundformteil geformt werden können. Bevorzugt kann dazu die Matrize ausgelegt sein eine Mehrzahl an flächenhaften Dekorstrukturen aufzunehmen. Dabei kann die Matrize so ausgestaltet sein, dass mehrere flächenhafte Dekorstrukturen nebeneinander anordenbar sind, so dass das das Verbundformteil am Ende eine Mehrzahl an durch flächenhafte Dekorstrukturen umspannte Teile der Oberfläche aufweist. Alternativ oder ergänzend kann die Matrize so ausgestaltet sein, dass mehrere flächenhafte Dekorstrukturen hintereinander anordenbar sind. Dies kann besonders dann nützlich sein, wenn zwischen der Trägerstruktur und einer flächenhaften Dekorstruktur eine weitere flächenhafte Struktur vorgesehen ist. In einer besonderen Ausführungsform kann dies ein Organoblech oder ein Naturfasergewebe sein.

In einer weiteren besonderen Ausführungsform kann diese weitere flächenhafte Struktur bereits zugeschnitten sein, so dass sie nicht von der Nase durchtrennt ist.

In einer besonderen, alternativen Ausführungsform bildet das beschriebene Halbzeug als Einleger mindestens einen Teil der Trägerstruktur. So kann zum Beispiel durch Temperaturzuführung in einen plastischen Zustand gebrachtes Halbzeug, z.B. Organoblech, Naturfasermatte, Naturfasergewebe, Fasertape oder ein anderes Faserverstärktes Halbzeug mindestens Teile der Trägerstruktur bilden und/oder ersetzen. In diesem Falle wird kein über das Bauteil überstehender Bereich dieser Halbzeuge durch die vorliegende Vorrichtung abgetrennt. Bevorzugt wird die Trägerstruktur entweder durch die thermoplastische Verformung oder durch angepassten Zuschnitt an die Endform angepasst.

In einer besonderen Ausführungsform verfügt die Vorrichtung über eine Struktur auf der Innenseite des durch die Elemente Schieber, Stempel und Matrize definierten Hohlraums. Diese Struktur kann einerseits für die Formgebung des Verbundformteils erforderlich sein und/oder die entsprechende Oberflächenbeschaffenheit auf die flächenhafte Dekorstruktur aufprägen.

Im Sinne der vorliegenden Erfindung ist durch Schieber, Stempel und/oder Matrize ein Hohlraum dann hinreichend definiert, wenn diese Elemente angrenzende Flächen aufweisen, welche zusammen den besagten Hohlraum umfassen. Ein solcher Hohlraum kann auch als Kavität definiert werden.

Wenn in der vorliegenden Schrift in der Einzahl von den Elementen Schieber, Stempel oder Matrize die Rede ist, so sei dies lediglich als Definition einer möglichen Bauteilfunktion zu verstehen und nicht limitiert auf die einstückige Ausführung. Das heißt eine erfindungsgemäße Vorrichtung kann eine Mehrzahl jeweils an Schiebern, Stempel oder Matrizen aufweisen. Auch können besonders komplexe Verbundformteile mehrteilige Matrizen, Stempel oder Schieber erfordern. Üblich ist auch bei gewissen Verbundformteilen eine Zonierung. Die endgültigen Geometrien sind auf die entsprechende erwünschte Hohlform gerichtet und liegen im Ermessensspielraum des entsprechenden Fachmanns.

Man kann die Bildung eines Hohlraums im geschlossenen Zustand der Vorrichtung auch wie folgt definieren, in dem man die Bildung des Hohlraums als eine Annäherung der Elemente Schieber, Stempel und Matrize bestimmt, bis ein im Wesentlichen fluiddichter Raum durch sie begrenzt wird; selbstverständlich vorbehaltlich einer Einspritz- oder Einfliessöffnung für die zu härtende Masse, welche die spätere Trägerstruktur bildet. Der geschlossene Zustand kann durchaus Abstände und somit Zwischenräume zwischen den Bestandteilen umfassen. In diesen Zwischenräumen kann zum Beispiel ein späterer Überschuss der flächenhaften Dekorstruktur gehalten oder verklemmt sein, sodass im Wesentlichen der Effekt der fluiddichten Verbindung bestehen bleibt. Bevorzugt wird ein solcher Zwischenraum im Wesentlichen vollständig von einer Nase überbrückt. Bevorzugt wird der Abschluss des Hohlraums nicht durch die flächenhafte Dekorstruktur gebildet.

Die vorliegende Erfindung ist nicht auf die Bildung eines einzelnen zusammenhängenden Hohlraums beschränkt. Je nach Geometrie des herzustellenden Verbundformteils kann eine Mehrzahl von Hohlräumen in geschlossenem Zustand bestehen. So können einzelne Rippen, Lamellen und/oder Materialverdickungen am Verbundformteil jeweils durch eigene gebildete Hohlräume gebildet werden, die zur Aufnahme einer ungehärteten Trägerstruktur ausgelegt sind. Eine solche Mehrzahl an Hohlräumen kann z. Bsp. durch separate Einspritzöffnungen mit der ungehärteten Trägerstruktur befüllt, insbesondere bespritzt, werden.

In einer besonderen Ausführungsform wird aber genau ein zusammenhängender Hohlraum definiert.

In einer besonderen Ausführungsform definieren zwei zueinander verlaufende Kanten der Nase einen Winkel der in Richtung des Zwischenraums spitz ist. Bevorzugt umspannen die beiden Kanten einen Winkel von zwischen 0.01 und 89.9 °. Besonders bevorzugt von zwischen 10 und 70 °. Weiter besonders bevorzugt von zwischen 25 und 50 °.

In einer besonderen Ausführungsform bildet eine Kante der Nase eine Abschlussfläche der Innenfläche des Hohlraums in geschlossenem Zustand. Besonders bevorzugt bildet diese Kante die Abschlussfläche eines Umbugs.

In einer besonders bevorzugten Ausführungsform ist der Zwischenraum dergestalt im Wesentlichen überbrückt, dass zwischen der Nase und dem gegenüberliegenden Element aus Schieber, Stempel oder Matrize ein maximaler Abstand von zwischen 0 und 50 µm besteht.

In einer alternativen Ausführungsform zur einstückigen Variante ist die Nase auf das entsprechende Bauteil aufgelötet, aufgeschweißt, aus dem Vollen gefräst, aufgeklebt, aufgeschraubt oder anderweitig formschlüssig befestigt.

In einer besonderen Ausführungsform umfasst die Vorrichtung eine Mehrzahl an Nasen. In einer weiteren besonderen Ausführungsform davon, sind zwei Nasen auf gegenüberliegenden Elementen so angeordnet, dass sie gemeinsam den Zwischenraum zwischen diesen Elementen überbrücken. In dieser Ausführungsform sind die Nasen so angeordnet, dass eine Zangenbewegung auf die flächenhafte Dekorstruktur durchgeführt wird, wenn sich die beiden Elemente zueinander in die Geschlossen-Position bewegen.

In einer besonderen Ausführungsform ist die Nase aus einem besonders verschleiß-resistenten Material, mit einem solchen beschichtet oder besteht aus einem gehärteten Material.

Als Überschuss sei im Sinne der vorliegenden Erfindung das Material zu verstehen, welches am fertigen Verbundformteil an nicht verbundenen, flächenhaften Dekorstruktur hängenbleiben würde nachdem die Trägerstruktur mit der flächenhaften Dekorstruktur verbunden wurde. Mit anderen Worten kann als Überschuss im Wesentlichen die ganze nicht mit der Trägerstruktur verbundene flächenhafte Dekorstruktur verstanden werden.

In einer besonderen Ausführungsform ist die Matrize so ausgelegt, dass sie zur Aufnahme der flächenhaften Dekorstruktur in einem unverbundenen Zustand ausgelegt ist und sich die Dekorstruktur mit ihrem Überschuss über mindestens einen Zwischenraum zwischen der Matrize und dem Stempel oder der Matrize und dem Schieber erstreckt.

In einer weiteren, besonderen Ausführungsform erstreckt sich der Überschuss in einem unverbundenen Zustand in einem Zwischenraum zwischen Schieber und Stempel.

Die erfindungsgemäße Vorrichtung ermöglicht die Herstellung von Verbundformteilen ohne einen aufwändigen, nachträglichen Schritt des Entfernens des Überschusses an flächenhafter Dekorstruktur vom Formteil. Dadurch wird der Prozess insgesamt effizienter und Produktionskosten werden gespart. Dadurch, dass die Nase den Hohlraum mit abdichtet, wird kein Restmaterial oder Überschuss der flächenhaften Dekorstruktur mehr benötigt, um einen fluiddichten Hohlraum für die Einführung der Trägerstruktur zu erhalten. Dies ermöglicht insgesamt eine präzisere und sauberere Prozesskontrolle. Als weiterer Vorteil kann durch die erfindungsgemässe Vorrichtung der Überschuss werkzeugfrei entnommen werden. Insbesondere ermöglicht eine Ausführung der erfindungsgemässen Vorrichtung die gleichzeitige Entnahme des Überschusses mit dem Entformen des Verbundformteils

In einer besonderen Ausführungsform sind Matrize und Schieber dadurch in Bezug zueinander bewegbar ausgestaltet, dass die Vorrichtung einen entsprechenden Antrieb umfasst. Dieser Antrieb kann ein Hydraulikzylinder und/oder ein Pneumatikzylinder und/oder eine Mechanik (z.B. Schrägsäulen) und/oder einen Linearantrieb umfassen. Bevorzugt ist die Bewegbarkeit so ausgestaltet, dass eine translatorische Bewegung des Schiebers in Relation zur Matrize ermöglicht ist. In einer weiteren besonderen Ausführungsform ist der Schieber auf der Matrize gelagert und wird über einen Hydraulikzylinder entlang dieses Lagers verschoben.

In einer besonderen Ausführungsform ist mindestens ein Element, Schieber, Stempel oder Matrize, so ausgestaltet, dass es an einer Begrenzung des Hohlraums in geschlossenem Zustand einen Radius beschreibt, sodass ein Umbug an besagter Stelle den Hohlraum begrenzt und dieser von der aufliegenden flächenhaften Dekorstruktur mitbeschrieben werden kann. Bevorzugt ist der Matrizenschieber so ausgestaltet, dass er eine als Umbug gekrümmte Innenfläche des Hohlraums definiert. Im Betrieb würde die flächenhafte Dekorstruktur diesen Umbug so mitbeschreiben, dass der Überschuss um diese Umbugkante hinausverläuft, in einen Zwischenraum zwischen Schieber und Stempel.

In einer weiteren besonderen Ausführungsform ist die Nase angrenzend am besagten Radius ausgebildet und so ausgestaltet, dass durch die Nase der besagte Umbug der aufliegenden flächenhaften Dekorstruktur abgeschlossen ist. Besonders bevorzugt ist der Überschuss der flächenhaften Dekorstruktur, welche diesen Umbug mitbeschreibt und in den Zwischenraum weiterverläuft zwischen der Nase und dem gegenüberliegenden Element im Wesentlichen durchtrennt.

Im Sinne der vorliegenden Erfindung ist der Überschuss im Wesentlichen durchtrennt, wenn mindestens achtzig Prozent, bevorzugt mindestens neunzig Prozent und besonders bevorzugt mindestens fünfundneunzig Prozent der Schichtdicke der flächenhaften Dekorstruktur von der Nase durchdrungen wird sodass der Überschuss vom Rest der flächenhaften Dekorstruktur abgetrennt wird.

In einer besonderen Ausführungsform ist die Nase am Schieber ausgebildet und überbrückt den Zwischenraum zum Stempel im Wesentlichen. Besonders bevorzugt ist die Nase so ausgestaltet, dass sie im geschlossenen Zustand den Zwischenraum im Wesentlichen überbrückt und den Hohlraum in Bezug auf eine Füllmasse fluiddicht abdichtet.

In einer besonderen Ausführungsform erstreckt sich die Nase von einem der Elemente Schieber, Stempel, oder Matrize in den besagten Zwischenraum und verjüngt sich.

In einer besonderen Ausführungsform umfasst die Vorrichtung weiter ein Rückstellelement zwischen der Matrize und dem Schieber. Besonders bevorzugt handelt es sich bei diesem Rückstellelement um eine Feder. Durch dieses Rückstellelement kann bei entlastetem Antrieb zwischen Schieber und Matrize, zum Beispiel bei entlasteten Hydraulikzylinder eine Beabstandung der Matrize und dem Schieber ermöglicht werden.

In einer besonderen Ausführungsform umfasst die Vorrichtung eine Distanzrondelle am Stempel, welche einen Gleitaufschlag für die Matrize bildet. Dadurch kann beim Schließen der Vorrichtung Kraft vom Stempel über die Distanzrondelle an den Matrizenschieber abgegeben werden, während dieser an der Distanzrondelle abgleitet und zur Matrize geschoben wird.

In einer besonderen Ausführungsform umfasst die Vorrichtung drei im Wesentlichen stufenlos ineinander überführbare Positionen, welche jeweils durch einen Funktionsabschluss definiert sind. Dabei kann die entsprechende Funktion in verschiedenen Übergangsstufen zwischen den einzelnen Positionen anfangen und/oder beginnen.

Die erfindungsgemässe Vorrichtung weist eine Steuereinheit zur gesteuerten Überführung der Vorrichtung in die entsprechenden Positionen auf.

In einer besonderen Ausführungsform weist die erfindungsgemässe Vorrichtung eine Geschlossen-Position, eine Offen-Position und eine Präge-Position auf.

In einer besonderen Ausführungsform weisen die Stempel, Matrize und Schieber jeweils eine Geschlossen-Position, eine Offen-Position und eine Präge-Position auf. In ihrer Geschlossen-Position definieren sie den besagten Hohlraum. In einer besonderen Ausführungsform sind nur Schieber und/oder Stempel mit entsprechenden Positionen vorgesehen und bewegbar angeordnet, während die Matrize den Bezugspunkt bildet zu dem die anderen Elemente ihre jeweilige Position annehmen.

In einer besonderen Ausführungsform schliessen die Nase und ein angrenzender Umbug den Hohlraum so ab, dass keine Schmelze aus diesem heraustreten kann. Vorzugsweise ist ein maximaler Abstand zwischen der Nase und dem gegenüberliegenden Element in der Geschlossen-Position der Vorrichtung geschlossen Zustand so groß, dass aufgrund der Viskosität einer geeigneten Kunststoffschmelze für die Trägerstruktur, insbesondere einer Polypropylen-Kunststoffschmelze, kein Durchfluss durch den maximalen Abstand möglich ist.

Ein weiterer Aspekt der vorliegenden Erfindung betrifft ein Verfahren zur Herstellung eines Verbundformteils mit einer mindestens einen Teil der Oberfläche des Verbundformteils umspannenden flächenhaften Dekorstruktur und einer Trägerstruktur. Dieses Verfahren wird mit einer Vorrichtung, insbesondere mit einer Vorrichtung wie oben geschildert durchgeführt. Das Verfahren umfasst eine Reihe von Schritten. Grundsätzlich soll eine entsprechende Vorrichtung bereitgestellt werden, welche mindestens eine Offen-Position, mindestens eine Präge-Position und mindestens eine Geschlossen-Position einzunehmen vermag. Eine noch unverbundene flächenhafte Dekorstruktur wird in der Vorrichtung so bereitgestellt, dass die Dekorstruktur mindestens einen Teil einer Kontur des zu erzielenden Verbundformteils definiert.

Die Vorrichtung wird in eine Geschlossen-Position überführt, sodass im Inneren der Vorrichtung ein Hohlraum definiert wird, welcher die Form des herzustellenden Verbundformteils im Wesentlichen bestimmt. Sollte noch kein Umbug im Randbereich der flächenhaften Dekorstruktur vorliegen, so erfolgt im Zuge des Überführens der Vorrichtung in die Geschlossen-Position das Umlegen der flächenhaften Dekorstruktur zu einem Umbug.

Die Vorrichtung wird ein Stück weit geöffnet und in eine Präge-Position überführt. Nun wird eine ungehärtete Trägerstruktur in den Hohlraum eingeführt bei gleichzeitigen oder mindestens getakteten Rückführen der Vorrichtung in die Geschlossen-Position. Das eingeführte Material wird ausgehärtet und anschließend wird das resultierende Verbundformteil entformt. Bei dem Verfahren wird ein Überschuss der flächenhaften Dekorstruktur vor oder während des Einführens der ungehärteten Trägerstruktur abgetrennt. In einer besonderen Ausführungsform wird der Überschuss während einer ersten Überführung mindestens zweier Elemente der Vorrichtung in ihre entsprechenden Geschlossen-Positionen abgetrennt, insbesondere zu dem Zeitpunkt dann, wenn ein Zwischenraum zwischen den besagten mindestens zwei Elementen von einer Nase an mindestens einem der Elemente im Wesentlichen vollständig überbrückt ist.

Durch das erfindungsgemäße Verfahren entsteht eine besonders saubere Schnittkante und es erübrigt sich ein anschließendes nach dem Entformen stattfindendes Entfernen des Überschusses.

Für die Schritte des erfindungsgemässen Verfahrens ist nicht eine zwingende Reihenfolge einzuhalten, um den Effekt der Erfindung zu erhalten, sofern dies nicht explizit erwähnt ist.

In einer besonderen Ausführungsform umfasst das Überführen der Vorrichtung von einem Zustand in den Anderen, das heißt von der Offen-Position in die Geschlossen-Position und in die Präge-Position ein schrittweises Verschieben eines der Elemente Schieber, Matrize und Stempel in aufeinanderfolgender Reihenfolge.

In einer besonderen Ausführungsform wird beim Übergang von der Offen-Position zur Geschlossen-Position zunächst ein Stempel von einer Stempel-Offen-Position in eine Stempel-Geschlossen-Position gefahren.

Entsprechend kann jedes der Bauteile eine Offen- und eine Geschlossen- und eine Präge-Position aufweisen. Dies kann auch bedeuten, dass bei einer komplexen Vorrichtungsstruktur, welche mehrere Ausführungen eines dieser Bauteile umfasst diese auch entsprechend eigene Offen-, Geschlossen- und Präge-Positionen aufweisen können.

In einer besonderen Ausführungsform überführt der Stempel über einen Gleitaufschlag einen Schieber von einer Schieber-Offen-Position in eine Schieber-Geschlossen-Position.

In einer besonderen Ausführungsform überführt ein Hydraulikzylinder und/oder ein Pneumatikzylinder und/oder ein Linearantrieb einen Schieber von einer Schieber-Offen-Position in eine Schieber-Geschlossen-Position.

In einer besonderen Ausführungsform wird beim Übergang von der Offen-Position zur Geschlossen-Position zunächst ein Schieber von einer Schieber-Offen-Position in eine Schieber-Geschlossen-Position überführt.

In einer besonderen Ausführungsform des erfindungsgemäßen Verfahrens wird der Überschuss der flächenhaften Dekorstruktur beim Überführen des Schiebers von einer Schieber-Offen-Position in eine Schieber-Geschlossen-Position abgetrennt.

In einer besonderen Ausführungsform wird ein Zwischenraum zwischen Schieber und dem gegenüberliegenden Element, insbesondere dem Stempel, von einer Nase zu mindestens 80 %, bevorzugt mindestens 90 %, besonders bevorzugt mindestens 95 % bis nahezu zur Kontaktierung der gegenüberliegenden Fläche überbrückt, sodass es zwischen Schieber und entsprechendem gegenüberliegendem Element, insbesondere besagtem Stempel, ein liegender Überschuss der flächenhaften Dekorstruktur vom innerhalb des Hohlraums liegenden Dekorteils der flächenhaften Dekorstruktur abgetrennt.

In einer besonderen Ausführungsform wird ein abgeschnittener Überschuss der flächenhaften Dekorstruktur zeitgleich mit dem Entformen des Verbundformteils aus der Vorrichtung entfernt.

Grundsätzlich versteht es sich für einen Fachmann von selbst, dass sämtliche oben genannte Ausführungsformen sowohl bei der Vorrichtung als auch beim Verfahren in einer erfindungsgemäßen Ausgestaltung der Vorrichtung in beliebiger Kombination verwirklicht werden können, sofern sie sich nicht explizit ausschließen.

Im Folgenden wird die vorliegende Erfindung nun anhand konkreter Ausführungsbeispiele und Figuren näher erläutert, ohne allerdings auf diese eingeschränkt zu sein.

Die folgenden Figuren zeigen schematisch:
Fig. 1: zeigt schematisch einen Querschnitt durch eine Vorrichtung gemäß vorliegender Erfindung in Offen-Position;
Fig. 1a: zeigt schematisch einen Querschnitt der oben genannten Vorrichtung mit aufgenommener flächenhafter Dekorstruktur;
Fig. 1b: zeigt schematisch einen Zustand der Fig. 1;
Fig. 1c: zeigt schematisch die Vorrichtung in Geschlossen-Position
Fig. 1d: zeigt schematisch die Vorrichtung in Prägeposition;
Fig. 1e zeigt schematisch die Vorrichtung in Geschlossen-Position mit eingeführter Schmelze;
Fig. 2: zeigt schematisch eine alternative Ausführungsform der erfindungsgemäßen Vorrichtung, und
Fig. 3: zeigt schematisch eine weitere alternative Ausführungsform in einem bestimmten Zustand der erfindungsgemäßen Vorrichtung;
Fig. 4: zeigt schematisch eine alternative Ausführungsform mit einer zusätzlichen flächenhaften Struktur.

Die genannten Figuren sind nicht maßstabsgetreu und dienen lediglich der Illustration des erfindungsgemäßen Konzepts und sollen durch die Darstellung der verschiedenen Positionen, welche die Vorrichtung einnehmen kann, den Prozessablauf ebenso wie die strukturellen Merkmale der erfindungsgemäßen Vorrichtung illustrieren. Dabei ist selbstverständlich die letztlich erzeugte Form bestimmend für die Gestaltung der einzelnen Bauteile. Eine solche Anpassung ist den Kenntnissen des Fachmanns überlassen und weitgehend Routine. In den Figuren sind die jeweils analogen Bauteile mit den entsprechenden gleichen Bezugszeichen versehen.

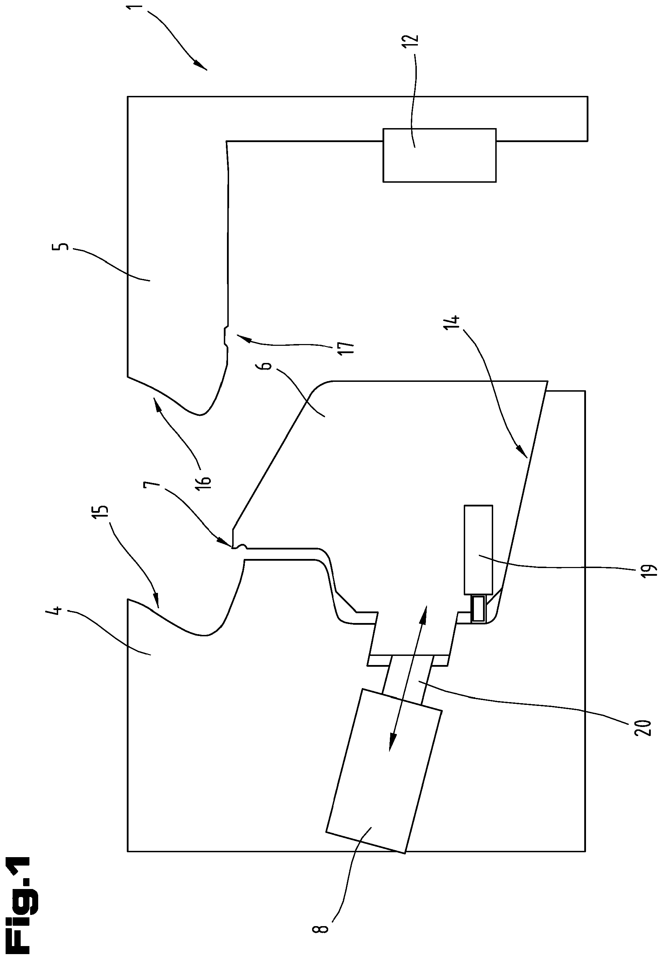

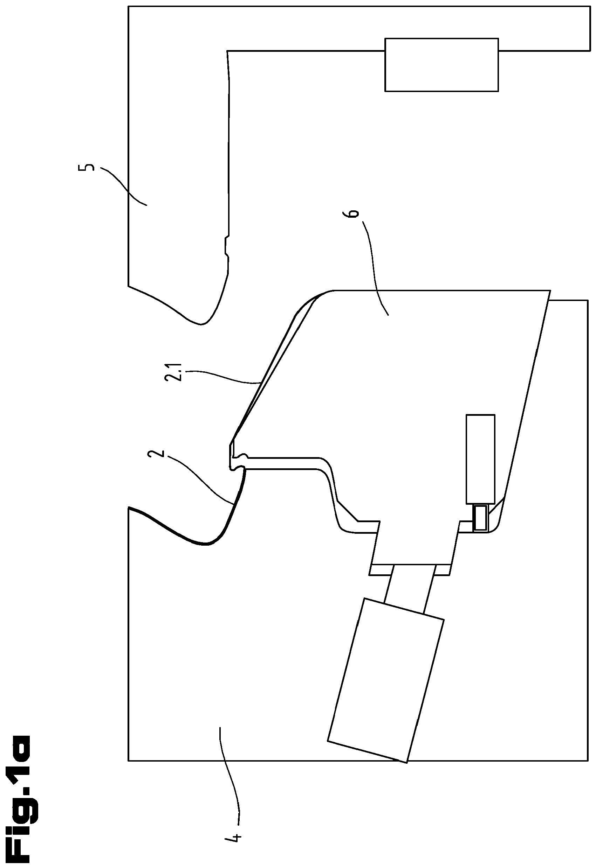

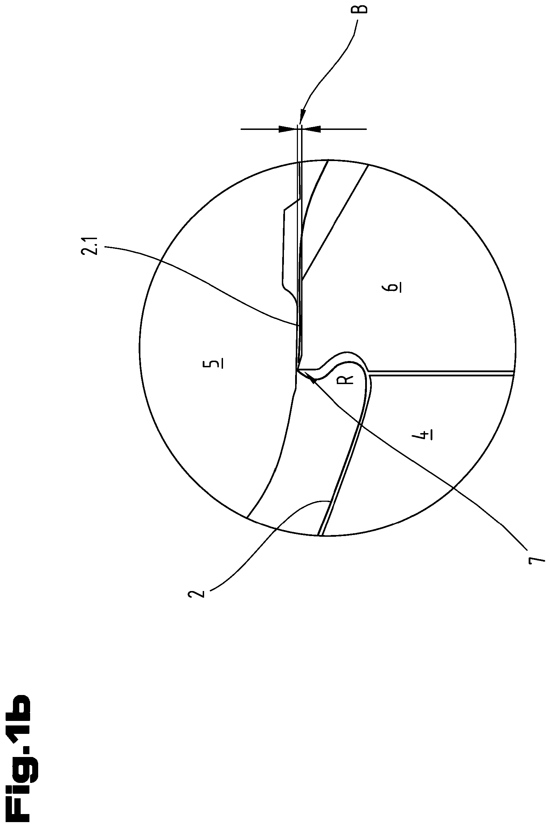

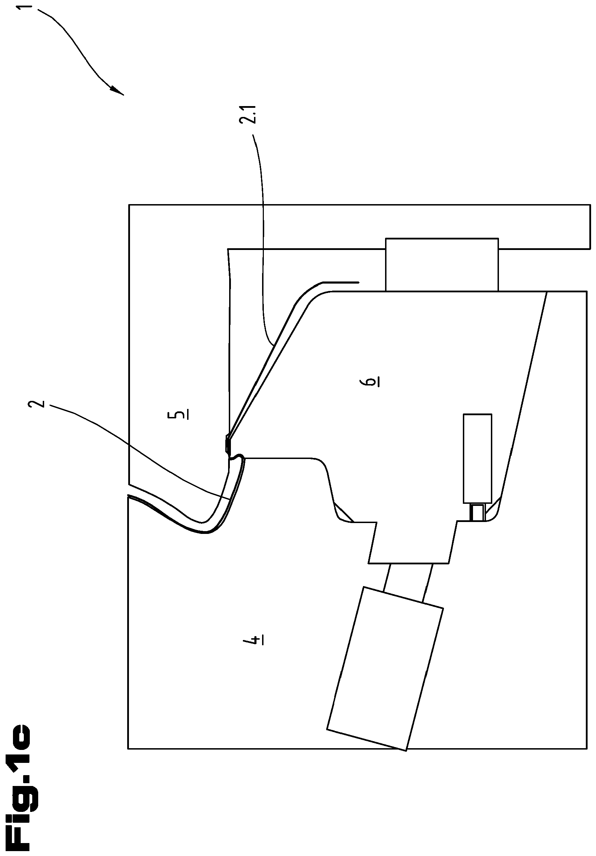

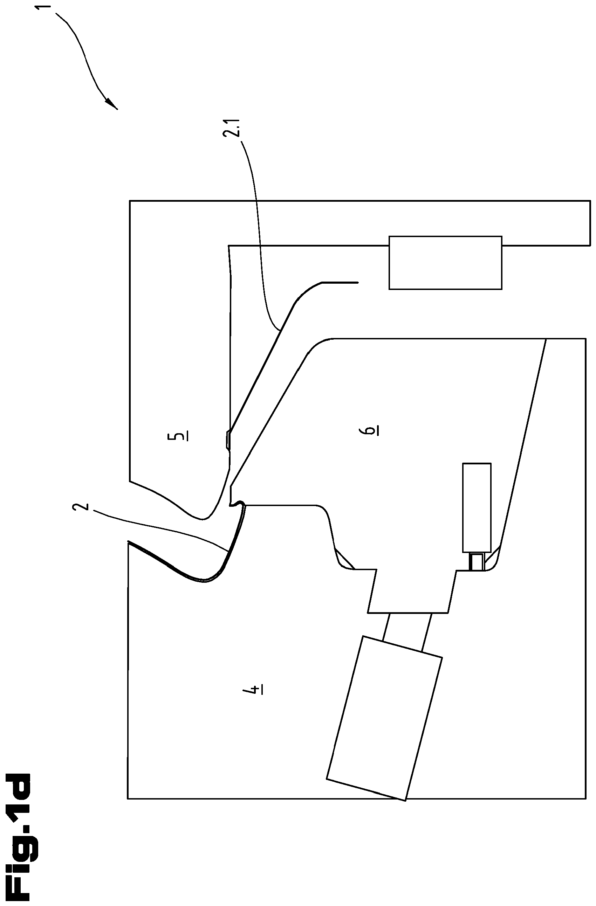

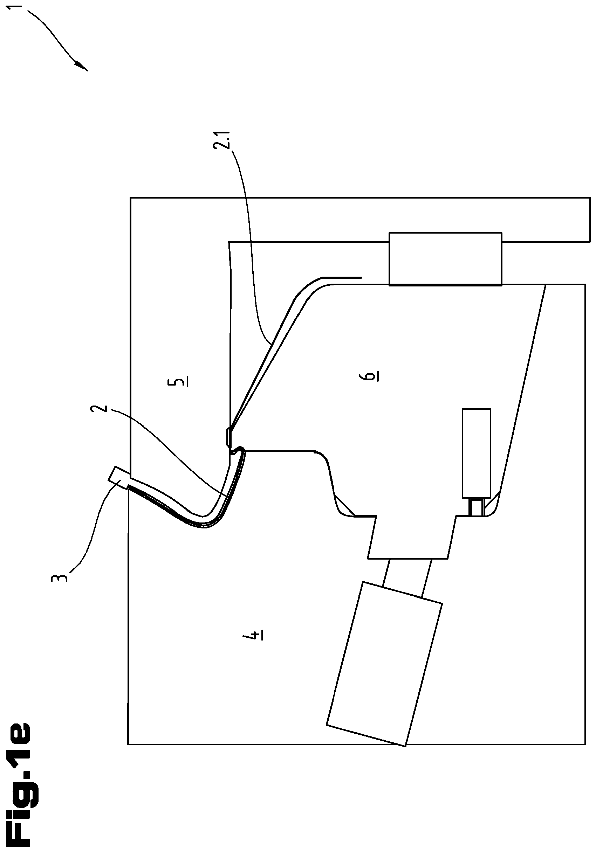

Fig. 1 zeigt eine erfindungsgemäße Vorrichtung 1 in einer Offen-Position. Die gezeigte Vorrichtung 1 dient dem Quellflussprägen mit einer Dekorfolie. Im illustrativ gezeigten Beispiel kann zum Beispiel eine Automobilverkleidung für den Innenraum als Verbundformteil mit einer dekorativen Kunstlederoptik versehen werden. Die Vorrichtung 1 ermöglicht einen Abschluss an den Kanten des Verbundformteils, welcher in einem Schritt umgebogen und vom überflüssigen Folienmaterial befreit ist.

Die Vorrichtung 1 umfasst im Wesentlichen drei Elemente. Eine Matrize 4 dient zur Aufnahme der flächenhaften Dekorstruktur (in Fig. 1 nicht gezeigt) und ist aus Stahl oder Aluminium oder einem anderen geeigneten Material gefertigt, je nach beabsichtigtem Anwendungsgebiet. Für besondere Anwendungen sind die Innenflächen wie z.B. die den späteren Hohlraum definierende Innenfläche 15 der Matrize mit besonderen Beschichtungen versehen. Dies kann neben einer erleichterten Ablösung und Entformung des fertigen Verbundformteils bei gewissen polymerischen Formvorgängen auch als katalytischer Helfer eingesetzt werden. Im oben genannten Beispiel ist dies für das Quellflussprägen nicht erforderlich.

Die Matrize 4 behaust auch einen Antrieb 8, bei welchem es sich im vorliegenden Beispiel um einen Hydraulikantrieb 8 handelt, der mittels eines Stössels 20 den benachbarten Schieber 6 betätigt. Der Schieber 6 ist auf einem Lager 14 parallel zur Lagerungsebene translatorisch zur Matrize 4 bewegbar. Im vorliegenden entlasteten Zustand ist der Schieber 6 um einen Abstand d von der Matrize beabstandet und wird entsprechend durch eine Rückstellkraft, welche von einer Feder 19 ausgeübt wird, auch so gehalten. Der Abstand d beträgt im vorliegenden Beispiel zwischen 0,1 und 50 mm, je nach Art und Größe des Verbundformteils und im konkreten Beispiel wird der Schieber 6 um 3 mm vorgeschoben. Dem Schieber 6 gegenüber befindet sich der Stempel 5. Dieser hat eine Stempelfläche 16, welche ihrerseits im späteren Zustand für das Anpressen der Trägerstruktur verantwortlich ist. Die Stempelfläche 16 bildet ebenfalls eine Innenfläche des zu bildenden Hohlraums. Eine Distanzrondelle 12 kontaktiert im späteren Verlauf des Prozesses den Schieber 6 und dieser gleitet auf der Distanzrondelle 12 in Richtung des Hohlraums.

Der Schieber 6 hat ein hakenförmiges Endstück am Hohlraum, welches in einer Nase 7 endet.

Zusätzlich weist im vorliegenden Beispiel der Stempel 5 eine Einkerbung 17 auf, welche bewirkt, dass eine eingelegte flächenhafte Dekorstruktur während der Schneidbewegung in der Geschlossen-Position der Vorrichtung 1 noch etwas Spiel hat und noch nachgezogen werden kann.

Fig. 1a zeigt die in der Fig. 1 beschriebene Vorrichtung, bei der eine vorgeformte flächenhafte Dekorstruktur 2 in die Matrize 4 eingelegt wurde. Die flächenhafte Dekorstruktur hier vollführt bereits den Umbug entsprechend dem Umbug des Schiebers 6. Bereits erkenntlich ist der aus dem späteren Hohlraum hinausragende Überschuss 2.1 des flächenhaften Dekormaterials. Im vorliegenden Beispiel vollführt der Umbug ein Umlegen der flächenhaften Dekorstruktur von nahezu 180°. Im vorliegenden konkreten Beispiel ist die flächenhafte Dekorstruktur allerdings vorgeformt und wird im Wesentlichen passförmig in die Matrize 4 eingelegt. Schieber 6 und Stempel 5 sind in ihren entsprechenden Offen-Positionen.

Die Fig. 1b illustriert im Prozess den geschlossenen Zwischenraum zwischen zwei Elementen, im vorliegenden Beispiel zwischen dem Schieber 6 und dem Stempel 5. In einem ersten Schritt wird dazu im vorliegenden Beispielverfahren der Stempel 5 von einer Stempel-Offen-Position in eine Stempel-Geschlossen-Position überführt. Gleichzeitig oder anschließend wird der Schieber 6 von einer Schieber-Offen-Position in eine Schieber-Geschlossen-Position überführt.

Alternativ kann auch zunächst der Schieber 6 von seiner Schieber-Offen-Position in ihre Schieber-Geschlossen-Position überführt werden.

Bei dem Überführen der beiden gegenüberliegenden Elemente Matrize 4 und Stempel 6 in ihre entsprechende Geschlossen-Position wird ein Punkt erreicht oder durchlaufen, in dem die Nase 7 den gesamten Zwischenraum B zwischen den Elementen im Wesentlichen vollständig überbrückt. Dabei kann das Überbrücken bis zu dem Punkt gebracht werden, bei dem ein physischer Kontakt zwischen der Nase 7 und dem gegenüberliegenden Element, hier den Stempel erreicht ist. Im vorliegenden Beispiel berühren sich die Elemente jedoch nicht, sondern es bleibt ein vernachlässigbarer Zwischenraum zwischen den Elementen von einigen wenigen Mikrometern bestehen. Dies kann den Vorteil haben, dass der Verschleiß an der Nase 7 wesentlich verringert wird. Grundsätzlich ist die Nase aber so in ihrer Endposition positioniert, dass eine Kante der Nase 7 den Abschluss des Hohlraums bildet. Bevorzugt wird der Abschluss des Hohlraums nicht durch die flächenhafte Dekorstruktur 2, 2.1 gebildet.

Der Überschuss des Dekormaterials 2.1 wird geschnitten, wenn die Nase das Material ausreichend gequetscht oder durchdrungen hat, dass kein Stoffschluss mehr zwischen der flächenhaften Dekorstruktur 2 und dem Überschuss 2.1 besteht. In der Vergrösserungsansicht der Fig. 1b ebenfalls gut ersichtlich ist, dass der Umbugradius direkt neben der Nase 7 ausgebildet ist und die Nase 7 eine Aufschlagsfläche bildet, welche im späteren geschlossenen Zustand Teil der Begrenzungsoberfläche des Hohlraums bildet.

Die Fig. 1c zeigt die ganze erfindungsgemäße Vorrichtung 1 in einer Geschlossen-Position entsprechend der Vergrösserung in der Fig. 1b.

In dieser Konfiguration sind der Stempel 5 in einer Geschlossen-Position und der Schieber 6 in einer Geschlossen-Position. Die Nase hat in diesem Zustand die Dicke der flächenhaften Dekorstruktur 2 durchdrungen, sodass der Überschuss 2.1 abgeschnitten wird. Die Distanzrondelle hat den Schieber 6 wie beschrieben kontaktiert.

Nun fährt in der Fig. 1d der Stempel 5 in eine Präge-Position, während der Schieber 6 in seiner Geschlossen-Position verweilt. Bei dieser Bewegung wird im vorliegenden Beispiel aus Illustrationsgründen gezeigt, wie der Überschuss 2.1 abgeschnitten wurde. In dieser Prägeposition beginnt nun der Einfluss der Schmelze in den Hohlraum bei gleichzeitiger Rückführung des Stempels 5 in seine Geschlossen-Position. Bis die Schmelze den Umbug erreicht hat, ist der Stempel vollständig in der Geschlossen-Position angekommen. In diesem Zustand wird nun die Schmelze gehärtet. Sobald die Schmelze ausreichend gehärtet wird, geht die Vorrichtung zurück in die Offen-Position und der Kern, also das Verbundformteil, wird entformt. Dabei kann gleichzeitig mit dem Entformen der abgeschnittene Überschuss 2.1 entfernt werden.

In der Fig. 1e erreicht der einmalige Verfahrensdurchlauf an der exemplarischen Vorrichtung 1 ihren Abschluss. Erneut ist die Vorrichtung 1 in ihrer Geschlossen-Position. Entsprechend ist der Schieber 6 in der Schieber-Geschlossen-Position und der Stempel 5 in der Stempel-Geschlossen-Position. Der eingeführte Kunststoff füllt als Schmelze nun den Hohlraum hinter der flächenhaften Dekorstruktur 2 und bildet die Trägerstruktur 3. Der Stempel 5 sorgt mit einem Anpressdruck für die Formgebung der Schmelze, welche im geschlossenen Zustand in der Vorrichtung gehärtet wird. Das Härten findet im vorliegenden Beispiel durch Abkühlen der als Trägerstruktur 3 im vorliegenden Beispiel verwendeten Polypropylen-Schmelze statt.

Durch den Anpressdruck des Stempels kann auch eine allfällige Strukturierung der Matrize 4 auf die flächenhafte Dekorstruktur angepresst werden, welche ihrerseits einen Verbund mit der Trägerstruktur-Schmelze eingeht. Die Nase und der anschliessende Umbug schliessen den Hohlraum so ab, dass keine Schmelze aus diesem heraustreten kann. Vorzugsweise ist daher ein maximaler Abstand zwischen der Nase und dem gegenüberliegenden Element im geschlossen Zustand so groß, dass aufgrund der Viskosität der Kunststoffschmelze, vorzugsweise einer Polypropylen-Kunststoffschmelze, kein Durchfluss durch den maximalen Abstand gestattet.

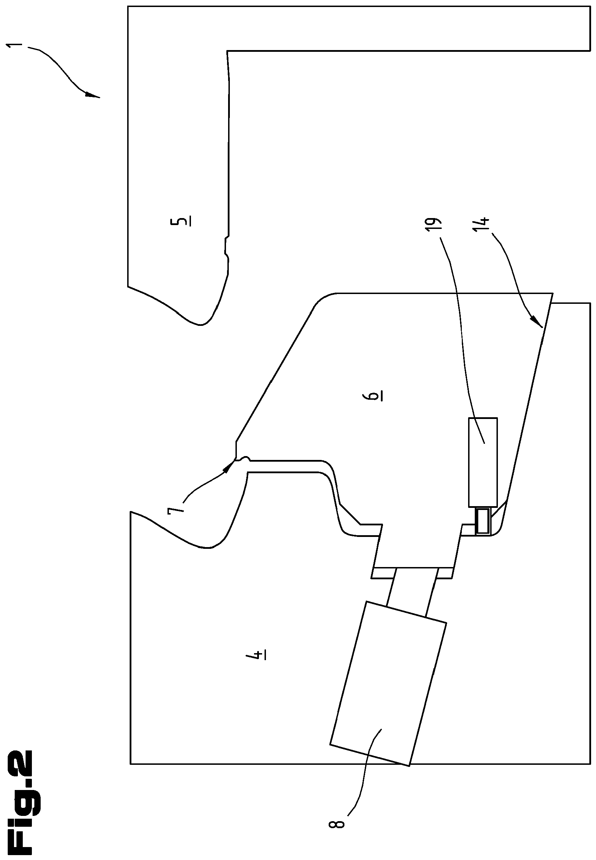

Die Fig. 2 zeigt eine alternative Ausführungsform, bei welcher auf die Distanzrondelle verzichtet wird. In diesem Beispiel wird der Schieber 6 zuerst aktiv vom Hydraulikzylinder in eine Geschlossen-Position überführt und erst im Anschluss fährt der Stempel ebenfalls in diese Geschlossen-Position und dadurch wird die Beabstandung zwischen Matrizenschieber 6 und Stempel 5 über die Nase 7 an dem nächsten Punkt bei dem die Nase 7 die Beabstandung nahezu vollständig überbrückt vorbeigeführt, welche zu einem Durchtrennen der Dekorstruktur 2 und dem Abtrennen des Überschusses 2.1 führt.

Im Gegensatz zur oberen Ausführungsform ist die gesamte Kraft, welche den Schieber 6 in die Geschlossen-Position überführt, vom Hydraulikzylinder aufzubringen.

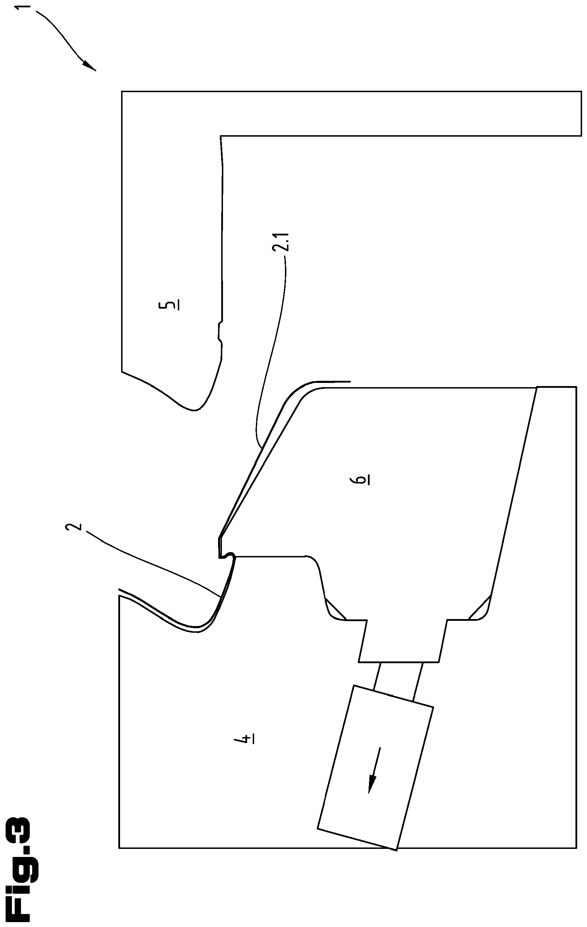

Grundsätzlich wäre es auch möglich, auf eine Rückstellfeder ganz zu verzichten. Eine solche Ausführungsform ist insbesondere in der Fig. 3 gezeigt, bei welcher die gesamte Kraft auch die Rückstellung des Schiebers in die Offen-Position vom Antrieb 8 ausgeführt wird. Diese Ausführungsform wäre besonders für einen Linearantrieb geeignet.

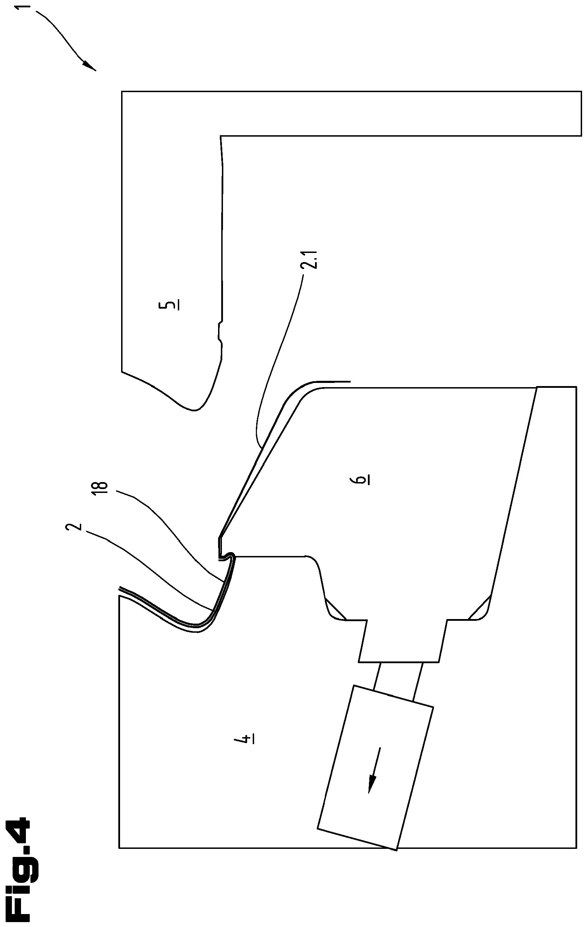

Fig. 4 zeigt eine erfindungsgemässe Vorrichtung bei der zusätzlich zur flächenhaften Dekorstruktur 2 mit ihrem abzutrennenden Überschuss 2.1 eine weitere, allerdings bereits zugeschnittene flächenhafte Struktur 18 in die Matrize 4 eingelegt ist. In einem konkreten Beispiel kann es sich hierbei um ein Organoblech oder eine vorgeformte Naturfaserschicht handeln. Die flächenhafte Struktur 18 kann mittels der Prägebewegung mit der flächenhaften Dekorstruktur 2 verbunden werden. Ebenso wäre es möglich ein Adhäsiv zu verwenden. Das Adhäsiv kann vorgängig auf der flächenhaften Struktur 18 oder der flächenhaften Dekorstruktur 2 angebracht sein. Ebenfalls denkbar ist ein Adhäsiv, dass es erst bei Einwirkung der Temperatur der Schmelze der Trägerstruktur seine Adhäsiven Eigenschaften entfaltet. Durch die Prägebewegung in die Stempel-Geschlossen-Position des Stempels 5 werden die Strukturen verpresst und mit der Schmelze der Trägerstruktur verbunden.

### Beispiel 1:

Im vorliegenden Beispiel wird für ein Verbundformteil mit einfacher flächenhafter Dekorstruktur ein Prozessablauf einmalig durchlaufen, wobei die Zyklen des Prozessablaufs durchnummeriert wurden. In der linken Spalte sind beispielhafte Zyklenintervalle gezeigt. Für einen Fachmann versteht es sich von selbst, dass dies bloss Näherungsangaben sind und je nach Art des herzustellenden Verbundformteils und der Materialien dafür die Zyklenintervalle. Die folgenden Intervalle sind bei gängigen Thermoplasten, wie z.B. Polypropylen üblich.

| **Nr.** | **Vorgang** | **Zeit [s]** |
|---|---|---|
| 1 | Grundposition (Offen-Position -Werkzeug offen, Schieber 3mm vor) | 0 |
| 2 | Flächenstruktur einlegen | 8 |
| 3 | Schliessbewegung - rasch bis z.B. bis ca. 3mm vor Geschlossen-Position | 6 |
| 4 | Schliessbewegung - langsam, gleichzeitig (oder unmittelbar danach Schliessen des Schiebers und somit Schneiden der Flächenstruktur) | 1 |
| 5 | Werkzeug öffnen zu Präge-Position (z.B. 14mm weit von der Geschlossen in die Offen-Position) | 2 |
| 6 | Einspritzen der Schmelze | 5 |
| 7 | Prägebewegung bis Werkzeug komplett geschlossen, Schliesskraftaufbau | 3 |
| 8 | Kühlzeit, aushärten der Schmelze | 30 |
| 9 | Schliesskraftabbau, Werkzeug öffnen - rasch | 6 |
| 10 | Bauteil und Folienüberschuss aus dem Werkzeug entformen/entnehmen | 8 |

## Patentansprüche

1. Vorrichtung (1) zur Herstellung eines Verbundformteils mit einer mindestens einen Teil des Verbundformteils mittels Quellfluss-Prägen oder Spritz-Prägen, insbesondere einen Teil der Oberfläche des Verbundformteils, umspannenden flächenhaften Struktur (2), insbesondere flächenhaften Dekorstruktur (2), und einer Trägerstruktur (3), die Vorrichtung (1) umfassend:
a) eine Matrize (4), zur Aufnahme der flächenhaften Dekorstruktur (2) in einem unverbundenen Zustand;
b) einen Stempel (5), und
c) einen Schieber (6), wobei Stempel (5), Matrize (4) und Schieber (6) bewegbar so angeordnet sind, dass sie in einem geschlossenen Zustand gemeinsam einen Hohlraum (A) definieren, welcher im Wesentlichen der Form des herzustellenden Verbundformteils entspricht,
d) eine Steuereinheit, eingerichtet zur gesteuerten Überführung von Stempel (5), Matrize (4) und Schieber (6) in eine Geschlossen-Position, eine Offen-Position und eine dazwischen liegende Präge-Position
e) wobei der Schieber (6) an einer Begrenzung des Hohlraums in geschlossenem Zustand einen Radius (R) zwischen 90 Grad und 270 Grad beschreibt, so dass ein Umbug an besagter Stelle den Hohlraum begrenzt und insbesondere dieser Umbug eine Auflage für die flächenhaften Dekorstruktur (2) ausbildet, wobei
der Schieber (6) unabhängig vom Stempel (5) betätigt werden kann und die Bewegungsrichtung des Schiebers (6) mit der Bewegungsrichtung des Stempels (5) einen spitzen Winkel einschliesst und angrenzend am Radius (R) eine Nase (7) am Schieber (6) ausgebildet und so ausgestaltet ist, dass durch die Nase (7) der besagte Umbug abgeschlossen ist, und wobei die Nase (7) in besagtem geschlossenen Zustand mindestens einen Zwischenraum (B) zwischen einem von Schieber (6), Stempel (5) oder Matrize (4) zu mindestens 80 % bis nahezu zur Kontaktierung der gegenüberliegenden Fläche überbrückt und im Wesentlichen abdichtet.

2. Vorrichtung gemäß Anspruch 1, wobei Matrize (4) und Schieber (6) in Bezug zueinander bewegbar ausgestaltet sind, insbesondere wobei die Vorrichtung (1) mindestens eines aus: einen Hydraulikzylinder (8) und/oder einen Pneumatikzylinder und/oder einen Linearantrieb umfasst, um eine translatorische Bewegung des Schiebers (6) in Relation zur Matrize (4) zu ermöglichen.

3. Vorrichtung (1) gemäß einem der Ansprüche 1 oder 2, wobei die Matrize (4) einen Antrieb (8) für den Schieber (6) sowie ein Lager (14) aufweist, auf welchem der Schieber (6) translatorisch zur Matrize (4) bewegbar ist.

4. Vorrichtung gemäß einem der Ansprüche 1 bis 3, wobei die Nase (7) sich von einem der Elemente Schieber (6), Stempel (5) oder Matrize (4) in den besagten Zwischenraum (B) erstreckt und verjüngt.

5. Vorrichtung gemäß einem der Ansprüche 1 bis 4, weiter umfassend ein Rückstellelement (9) zwischen der Matrize (4) und dem Schieber (6).

6. Vorrichtung gemäß einem der Ansprüche 1 bis 5, weiter umfassend mindestens eine Distanzrondelle (12) am Stempel (5), welche einen Gleitaufschlag für den Schieber (6) bildet.

7. Verfahren zur Herstellung eines Verbundformteils mit einer mindestens einen Teil der Oberfläche des Verbundformteils umspannenden flächenhaften Dekorstruktur (2) und einer Trägerstruktur (3), umfassend die Schritte:
a) Bereitstellen einer Vorrichtung, umfassend zumindest eine Matrize (4), einen Stempel (5) und einen Schieber (6), der an einer Begrenzung des Hohlraums in geschlossenem Zustand einen Radius (R) zwischen 90 Grad und 270 Grad beschreibt, in einer Offenposition;
b) Bereitstellen einer noch unverbundenen flächenhaften Dekorstruktur (2) in der Vorrichtung, so dass die Dekorstruktur mindestens einem Teil einer Kontur des zu erzielenden Verbundformteils entspricht;
c) Überführen der Vorrichtung in eine Geschlossen-Position, so dass im Inneren von Matrize (4), Stempel (5) und Schieber (6) ein Hohlraum definiert wird, welcher die Form des herzustellenden Verbundformteils im Wesentlichen bestimmt, einschliesslich eines Umbugs der flächenhaften Dekorstruktur (2) durch den Radius (R) des Schiebers (6);
d) Öffnen der Vorrichtung in eine Prägeposition;
e) Einführen einer ungehärteten Trägerstruktur in den Hohlraum bei gleichzeitigem Rückführen der Vorrichtung in die Geschlossen-Position;
f) Aushärten und anschließend Entformen des Verbundformteils, wobei
ein Überschuss (2.1) des Umbugs der flächenhaften Dekorstruktur (2) vor oder während dem Einführen der ungehärteten Trägerstruktur durch Überbrückung mindestens eines Zwischenraums (B) zwischen Schieber (6), Stempel (5) oder Matrize (4) zu mindestens 80 % bis nahezu zur Kontaktierung einer gegenüberliegenden Fläche in geschlossenen Zustand der Vorrichtung und während einer Relativbewegung von Schieber (6) und Stempel (5) abgetrennt wird.

8. Verfahren gemäß Anspruch 7, wobei beim Übergang von der Offenposition zur Geschlossen-Position zunächst ein Stempel von einer Stempel Offenposition in eine Stempel Geschlossen-Position fährt.

9. Verfahren gemäß Anspruch 8, wobei der Stempel über einen Gleitaufschlag einen Schieber von einer Schieber Offenposition in eine Schieber Geschlossen-Position überführt.

10. Verfahren gemäß Anspruch 8, wobei ein Hydraulikzylinder (8) und/oder einen Pneumatikzylinder und/oder einen Linearantrieb einen Schieber von einer Schieber Offenposition in eine Schieber Geschlossen-Position überführt.

11. Verfahren gemäß Anspruch 8, wobei beim Übergang von der Offenposition zur Geschlossen-Position zunächst ein Schieber von einer Schieber Offenposition in eine Schieber Geschlossen-Position fährt.

12. Verfahren gemäß einem der Ansprüche 7 bis 11, wobei der Überschuss (2.1) der flächenhaften Dekorstruktur (2) beim Überführen des Schiebers von einer Schieber Offenposition in eine Schieber Geschlossen-Position abgetrennt wird, insbesondere wobei ein Zwischenraum zwischen Schieber und einem gegenüberliegenden Element, insbesondere dem Stempel, von einer Nase im Wesentlichen überbrückt wird, so dass ein zwischen Schieber und entsprechendem gegenüberliegendem Element, insbesondere Stempel, liegender Überschuss (2.1) der flächenhaften Dekorstruktur (2) vom innerhalb des Hohlraums liegenden Dekorteils (2.2) der flächenhaften Dekorstruktur (2) abgetrennt wird.

13. Verfahren gemäß einem der Ansprüche 7 bis 12, wobei ein abgeschnittener der Überschuss (2.1) der flächenhaften Dekorstruktur (2) zeitgleich mit dem Entformen des Verbundformteils aus der Vorrichtung entfernt wird.

## Claims

1. A device (1) for producing a composite molded part with a laminar structure (2), in particular a laminar decorative structure (2), enveloping at least a part of the composite molded part, in particular a part of the surface of the composite molded part, and a support structure (3), by means of back compression moulding or injection embossing, the device (1) comprising:
a) a die (4) for receiving the laminar decorative structure (2) in a non-composite state;
b) a punch (5), and
c) a slider (6), wherein the punch (5), the die (4) and the slider (6) are movably arranged such that in a closed state they jointly define a cavity (A) which essentially corresponds to the shape of the composite molded part to be produced,
d) a control unit, configured to transfer the punch (5), die (4) and slider (6) in a controlled manner into a closed position, an open position and an intermediate embossing position
e) wherein the slider (6) describes a radius (R) between 90 degrees and 270 degrees at a boundary of the cavity in the closed state, so that a folded edge at said location bounds the cavity and in particular this folded edge forms a support for the laminar decorative structure (2), wherein
the slider (6) can be actuated independently of the punch (5) and the direction of movement of the slider (6) encloses an acute angle with the direction of movement of the punch (5), and a nose (7) is formed on the slider (6) adjacent to the radius (R) and is configured in such a way that the nose (7) closes said folded edge, and wherein the nose (7) in said closed state bridges and essentially seals at least an intermediate space (B) between one of the slider (6), punch (5) or die (4) to at least 80% until almost contacting the opposite surface.

2. The device according to claim 1, wherein the die (4) and the slider (6) are configured to be movable relative to each other, in particular wherein the device (1) comprises at least one of: a hydraulic cylinder (8) and/or a pneumatic cylinder and/or a linear drive, to enable a translational movement of the slider (6) in relation to the die (4).

3. The device (1) according to one of claims 1 or 2, wherein the die (4) comprises a drive (8) for the slider (6) and a bearing (14) on which the slider (6) can be moved in a translational manner relative to the die (4).

4. The device according to one of claims 1 to 3, wherein the nose (7) extends from one of the elements slider (6), punch (5) or die (4) into said intermediate space (B) and tapers.

5. The device according to one of claims 1 to 4, further comprising a return element (9) between the die (4) and the slider (6).

6. The device according to one of claims 1 to 5, further comprising at least one spacer washer (12) on the punch (5), which forms a sliding stop for the slider (6).

7. A method for producing a composite molded part with a laminar decorative structure (2) enveloping at least a part of the surface of the composite molded part, and a support structure (3), comprising the steps of:
a) providing a device comprising at least one die (4), a punch (5) and a slider (6) which, in a closed state, describes a radius (R) between 90 degrees and 270 degrees at a boundary of the cavity, in an open position;
b) providing a not yet composite laminar decorative structure (2) in the device, so that the decorative structure corresponds to at least part of a contour of the composite molded part to be obtained;
c) transferring the device to a closed position so that a cavity is defined inside the die (4), punch (5) and slider (6), which cavity essentially determines the shape of the composite molded part to be produced, including a folded edge of the laminar decorative structure (2) by the radius (R) of the slider (6);
d) opening the device into an embossing position;
e) introducing an uncured support structure into the cavity while simultaneously returning the device to the closed position;
f) curing and subsequent demolding the composite molded part, wherein an excess (2.1) of the folded edge of the laminar decorative structure (2) is separated before or during the introduction of the uncured support structure by bridging at least an intermediate space (B) between the slider (6), punch (5) or die (4) by at least 80% until almost contacting an opposing surface in the closed state of the device and during a relative movement of slider (6) and punch (5).

8. The method according to claim 7, wherein, during the transition from the open position to the closed position, a punch first moves from a punch open position to a punch closed position.

9. The method according to claim 8, wherein the punch transfers a slider from a slider open position to a slider closed position via a sliding impact.

10. The method according to claim 8, wherein a hydraulic cylinder (8) and/or a pneumatic cylinder and/or a linear drive transfers a slider from a slider open position to a slider closed position.

11. The method according to claim 8, wherein during the transition from the open position to the closed position, a slider first moves from a slider open position to a slider closed position.

12. The method according to one of claims 7 to 11, wherein the excess (2.1) of the laminar decorative structure (2) is separated when the slider is transferred from an slider open position to a slider closed position, in particular wherein an intermediate space between the slider and an opposing element, in particular the punch, is bridged by a nose, so that an excess (2.1) of the laminar decorative structure (2) lying between the slider and the corresponding opposing element, in particular the punch, is separated from the decorative part (2.2) of the laminar decorative structure (2) lying within the cavity.

13. The method according to one of claims 7 to 12, wherein a cut-off excess (2.1) of the laminar decorative structure (2) is removed from the device at the same time as the composite molded part is removed from the mold.

## Revendications

1. Dispositif (1) pour la fabrication d'une pièce moulée composite avec au moins une structure (2) entourant de manière plane au moins une partie de la pièce moulée composite par emboutissage ou injection-compression, plus particulièrement une partie de la surface de la pièce moulée composite, plus particulièrement une structure de décoration plane (2) et une structure de support (3), ce dispositif (1) comprenant :
a) une matrice (4), pour le logement de la structure de décoration plane (2) dans un état non lié ;
b) un poinçon (5) et
c) un coulisseau (6), dans lequel le poinçon (5), la matrice (4) et le coulisseau (6) sont disposés de manière mobile, de sorte que, dans un état fermé, ils définissent ensemble une cavité (A), qui correspond globalement à la forme de la pièce moulée composite à fabriquer,
d) une unité de commande conçue pour le transfert contrôlé du poinçon (5), de la matrice (4) et du coulisseau (6) vers une position fermée, une position ouverte et une position d'emboutissage située entre les deux
e) dans lequel le coulisseau (6) décrit, au niveau d'une limite de la cavité, dans l'état fermé, un rayon (R) entre 90 degrés et 270 degrés, de sorte qu'un repli à l'endroit mentionné délimite la cavité et, plus particulièrement, ce repli forme un appui pour la structure de décoration (2), dans lequel
le coulisseau (6) peut être actionné indépendamment du poinçon (5) et le sens de déplacement du coulisseau (6) forme, avec le sens de déplacement du poinçon, un angle aigu et, de manière adjacente au rayon (R), forme un embout (7) sur le coulisseau (6) et est conçu de sorte que l'embout (7) termine le repli mentionné et dans lequel l'embout (7), dans ledit état fermé, recouvre et étanchéifie globalement au moins un espace intermédiaire (B) entre le coulisseau (6), le poinçon (5) ou la matrice (4) à au moins 80 % presque jusqu'à la mise en contact avec la surface opposée.

2. Dispositif selon la revendication 1, dans lequel la matrice (4) et le coulisseau (6) sont conçus de façon à se déplacer l'un par rapport à l'autre, plus particulièrement dans lequel le dispositif (1) comprend au moins un élément parmi : un vérin hydraulique (8) et/ou un vérin pneumatique et/ou un entraînement linéaire, afin de permettre un mouvement de translation du coulisseau (6) par rapport à la matrice (4).

3. Dispositif selon l'une des revendications 1 ou 2, dans lequel la matrice (4) comprend un entraînement (8) pour le coulisseau (6) ainsi qu'un palier (14), sur lequel le coulisseau (6) est mobile avec un mouvement de translation par rapport à la matrice (4).

4. Dispositif selon l'une des revendications 1 à 3, dans lequel l'embout (7) s'étend et se rétrécit à partir d'un des éléments : coulisseau (6), poinçon (5) ou matrice (4), vers ledit espace intermédiaire (B).

5. Dispositif selon l'une des revendications 1 à 4, comprenant en outre un élément de rappel (9) entre la matrice (4) et le coulisseau (6).

6. Dispositif selon l'une des revendications 1 à 5, comprenant en outre au moins une rondelle d'écartement (12) sur le poinçon (5), qui constitue une butée de glissement pour le coulisseau (6).

7. Procédé pour la fabrication d'une pièce moulée composite avec au moins une structure de décoration (2), entourant de manière plane la surface de la pièce moulée composite et une structure de support (3), comprenant les étapes suivantes :
a) mise à disposition d'un dispositif, comprenant au moins une matrice (4), un poinçon (5) et un coulisseau (6), qui décrit, au niveau d'une délimitation de la cavité, dans l'état fermé, un rayon (R) entre 90 degrés et 270 degrés, dans une position ouverte ;
b) mise à disposition d'une structure de décoration plane (2) non encore liée dans le dispositif, de sorte que la structure de décoration correspond au moins à une partie d'un contour de la pièce moulée composite à obtenir ;
c) passage du dispositif dans une position fermée, de sorte que, à l'intérieur de la matrice (4), du poinçon (5) et du coulisseau (6), une cavité est définie, qui détermine globalement la forme de la pièce moulée composite à fabriquer, y compris un repli de la structure de décoration plane (2) par le rayon (R) du coulisseau (6) ;
d) ouverture du dispositif dans une position d'emboutissage ;
e) introduction d'une structure de support non durcie dans la cavité avec retour simultané du dispositif dans la position fermée ;
f) durcissement puis démoulage de la pièce moulée composite, dans lequel un excès (2.1) du repli de la structure de décoration plane (2) est sectionné avant ou pendant l'introduction de la structure de support non durcie par recouvrement d'au moins un espace intermédiaire (B) entre le coulisseau (6), le poinçon (5) ou la matrice (4) à au moins 80% presque jusqu'à la mise en contact d'une surface opposée, dans l'état fermé du dispositif et pendant un mouvement relatif du coulisseau (6) et du poinçon (5).

8. Procédé selon la revendication 7, dans lequel, lors de la transition entre la position ouverte et la position fermée, un poinçon se déplace d'abord d'une position ouverte de poinçon vers une position fermée de poinçon.

9. Procédé selon la revendication 8, dans lequel le poinçon fait passer, à l'aide d'une butée de glissement, un coulisseau d'une position ouverte de coulisseau vers une position fermée de coulisseau.

10. Procédé selon la revendication 8, dans lequel un vérin hydraulique (8) et/ou un vérin pneumatique et/ou un entraînement linéaire fait passer un coulisseau d'une position ouverte de coulisseau vers une position fermée de coulisseau.

11. Procédé selon la revendication 8, dans lequel, lors de la transition entre la position ouverte et la position fermée, un coulisseau se déplace d'abord d'une position ouverte de coulisseau vers une position fermée de coulisseau.

12. Procédé selon l'une des revendications 7 à 11, dans lequel l'excès (2.1) de la structure de décoration plane (2) est sectionné lors du passage du coulisseau d'une position ouverte de coulisseau vers une position fermée de coulisseau, plus particulièrement dans lequel un espace intermédiaire entre le coulisseau et un élément opposé, plus particulièrement le poinçon, est recouvert globalement par un embout, de sorte qu'un excès (2.1) de la structure de décoration plane (2), se trouvant entre le coulisseau et un élément opposé correspondant, plus particulièrement le poinçon, est séparé de la partie de décoration (2.2) de la structure de décoration plane (2) se trouvant à l'intérieur de la cavité.

13. Procédé selon l'une des revendications 7 à 12, dans lequel une portion sectionnée de l'excès (2.1) de la structure de décoration plane (2) est éliminée lors du démoulage de la pièce moulée composite hors du dispositif.
